# FASCICULE DE BREVET EUROPEEN

(11) **EP 0 714 559 B1**
(45) Date de publication et mention de la délivrance du brevet: **04.02.1998**
(21) Numéro de dépôt: 94926202.6
(22) Date de dépôt: 17.08.1994
(51) Int. Cl.: H01L 41/09, H02N 2/00

(54) **MOTEUR PIEZO-ELECTRIQUE A ONDE PROGRESSIVE**
PIEZOELEKTRISCHER WANDERWELLENMOTOR
PIEZOELECTRIC MOTOR WITH PROGRESSIVE WAVE

(30) Priorité: 18.08.1993 FR 9310086
(43) Date de publication de la demande: 05.06.1996
(73) Titulaire: FIGEST B.V., NL-2321 JV Leiden (NL)
(72) Inventeur: LE LETTY, Ronan, F-29120 Combrit (FR); CLAEYSSEN, Frank, F-38240 Meylan (FR); LHERMET, Nicolas, F-38240 Meylan (FR); GONNARD, Paul, F-69100 Villeurbanne (FR); GUILLEMOT-AMADEI, Marie Madeleine, F-69100 Villeurbanne (FR); LEBRUN, Laurent A. A., Apartement 16, F-69100 Villeurbanne (FR)
(74) Mandataire: Meylan, Robert Maurice
(86) Numéro de dépôt international: EP9402732
(87) Numéro de publication internationale: WO9505682

(56) Documents cités:
- EP-A- 0 569 673
- WO-A-91/11850

## Description

La présente invention a pour objet un moteur piézo-électrique à onde progressive comprenant un stator constitué d'un corps élastique annulaire, deux groupes d'éléments piézo-électriques constitués de bâtonnets de céramique polarisés indépendants les uns des autres, disposés perpendiculairement au stator, c'est-à-dire parallèlement à l'axe du moteur, répartis sur le stator, en contact permanent avec le stator et excités par un courant alternatif avec un déphasage de 90° entre les groupes de manière à engendrer à la surface du stator une déformation en forme d'onde progressive, et un rotor en forme de disque maintenu élastiquement en contact avec le stator pour son entraînement en rotation par l'onde progressive engendrée sur le stator.

Le principe de construction et de fonctionnement d'un tel moteur est décrit en détail dans le brevet américain 4 562 374. De manière à engendrer une onde progressive sur le stator, les deux groupes d'éléments piézo-électriques sont alimentés par une tension de même fréquence mais déphasées dans le temps d'un angle de π/2 et les groupes sont disposés sur le stator de manière telle que les ondes stationnaires générées par chacun des groupes soient décalées dans l'espace de λ/4, λ étant la longueur d'onde des ondes stationnaires. Les groupes d'éléments piézo-électriques peuvent être séparés l'un de l'autre ou imbriqués, les éléments piézo-électriques des deux groupes étant alors intercalés de telle sorte que l'on a alternativement un élément piézo-électrique de chaque groupe. Les moteurs décrits dans le brevet US 4 562 374 sont réalisés avec des plaquettes de céramique, en forme de segment de couronne, ces plaquettes étant collées au stator en formant une couronne complète ou des portions de couronne, selon que les groupes sont imbriqués ou non.

Des moteurs de même conception sont décrits dans le brevet US 4 562 373. De manière à augmenter l'efficacité de tels moteurs, deux anneaux d'éléments piézo-électriques imbriqués sont superposés et alimentés avec un déphasage approprié.

Le brevet US 4 513 219 décrit des moteurs de type électrostrictif dans lesquels les éléments électrostrictifs sont également constitués de plaquettes pressées contre un stator.

On constate donc que d'une manière générale on a utilisé des éléments piézo-électriques sous forme de plaquettes minces de manière à s'adapter à l'ondulation du stator. Ces plaquettes travaillent en mode 3.1, c'est-à-dire qu'elles se dilatent et se contractent dans une direction perpendiculaire au champ électrique appliqué. L'amplitude de déformation selon le mode 3.1 est relativement faible et c'est précisément pourquoi il a été proposé dans le brevet US 4 562 373 de superposer deux systèmes de plaquettes de manière à augmenter l'efficacité du moteur. En outre, les céramiques utilisées sont des pièces de formes complexes et fragiles, elles nécessitent des outillages élaborés de fabrication, de polarisation et de manipulation qui de plus sont souvent spécifiques à chaque céramique. Elles sont donc d'une mise en oeuvre coûteuse et mal adaptée à la production de grande série.

La présente invention a pour but de proposer un moteur piézo-électrique à onde progressive, robuste, efficace et d'un coût de fabrication avantageux.

A cet effet le moteur piézo-électrique selon l'invention est caractérisé en ce que les éléments piézo-électriques sont reliés chacun au stator par une articulation.

L'utilisation de bâtonnets travaillant perpendiculairement au stator, permet de travailler en mode 3.3, à leur fréquence de résonance propre, ce qui permet de bénéficier d'un facteur de couplage électromécanique élevé et donc d'obtenir à champ électrique constant, des déformations environ trois fois supérieures aux amplitudes obtenues dans les moteurs selon l'art antérieur. On obtient de plus une grande rigidité mécanique axiale.

Les bâtonnets de céramiques sont des éléments relativement peu fragiles et ne nécessitant donc pas de précautions spéciales pour leur mise en oeuvre. Les bâtonnets de céramique peuvent être des pièces standard du commerce, tels que les bâtonnets céramique des briquets et allume-gaz produits en très grande quantité et à bas prix.

Les bâtonnets permettent en outre de réaliser plus facilement des systèmes imbriqués dans lesquels les éléments piézo-électriques de chaque groupe sont répartis sur la totalité de la circonférence du stator.

L'utilisation de bâtonnets dont l'extrémité serait collée au stator de l'art antérieur poserait un problème. En effet, le stator subit une déformation ondulaire qui interférerait avec la déformation axiale des bâtonnets et ne permettrait pas un fonctionnement correct du stator et partant du moteur. Ce problème a été précisément résolu en reliant les bâtonnets au stator par une articulation permettant aux bâtonnets de rester sensiblement dans une position perpendiculaire au plan de repos du stator. Selon une forme d'exécution, les articulations sont réalisées sous forme d'amincissement de protubérances axiales du stator aux extrémités desquelles sont fixés les bâtonnets de céramique, par exemple par collage.

Au moyen de bâtonnets à double polarisation, il est possible de réaliser un moteur à deux stators et deux rotors coaxiaux et ainsi de doubler la puissance du moteur. De plus, l'immobilisation du stator au noeud de vibration est facilitée, ainsi que l'alimentation électrique.

Le dessin annexé représente, à titre d'exemple, des modes de réalisation du moteur selon l'invention.

La figure 1 est une vue schématique en plan d'un stator avec ses excitateurs piézo-électriques.

La figure 2 est une vue développée du stator de la figure 1.

La figure 3 représente schématiquement une vue développée d'un stator selon une deuxième forme d'exécution.

La figure 4 représente un autre mode d'exécution des articulations des bâtonnets de céramique ou stator.

La figure 5 est une vue en coupe axiale à travers un moteur à deux rotors construit selon le principe représenté à la figure 4.

La figure 6 représente un bâtonnet à double polarisation tel qu'utilisé dans le moteur selon la figure 5.

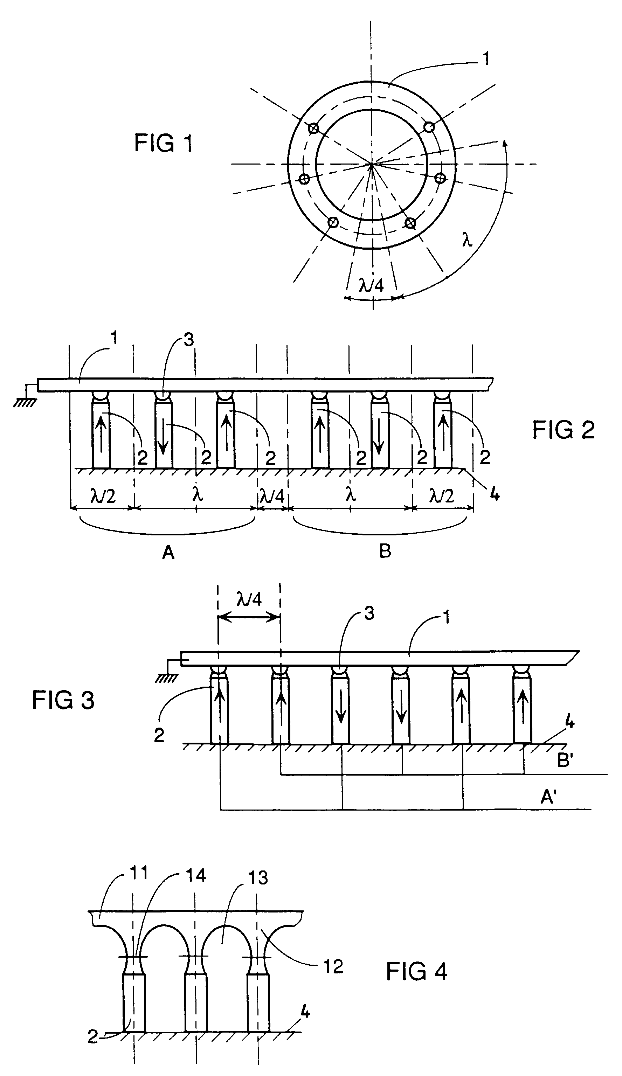

Les figures 1 et 2 représentent un stator 1 en forme d'anneau plat auquel deux groupes A et B de bâtonnets de céramique polarisés 2 sont reliés par des articulations 3. Les flèches indiquent le sens de polarisation des bâtonnets. On peut voir que ces bâtonnets présentent une polarisation alternée dans chacun des groupes. Les groupes A et B sont alimentés par des tensions électriques semblables, de même fréquence égale à la fréquence de résonance propre des bâtonnets, mais déphasées entre-elles d'un angle de π/2. Les deux groupes A et B sont disposés sur la circonférence du stator de telle manière que les ondes stationnaires générées par chacun des groupes sont décalées dans l'espace de λ/4, comme indiqué sur le dessin, λ étant la longueur d'onde des ondes stationnaires. Dans chacun des groupes, les bâtonnets sont disposés sur le stator 1 à une distance l'un de l'autre égale à λ/2. Sur la figure 2, les segments λ/2 et λ indiquent la position des ondes stationnaires. Les bâtonnets 2 s'appuient sur un appui 4.

La figure 3 représente le même stator 1, développé, auquel sont reliés, à nouveau par des articulations 3, des bâtonnets de céramique polarisés 2 répartis en deux groupes A' et B' alimentés de la même manière que les groupes A et B, ces groupes étant ici imbriqués, de telle sorte que sur la circonférence du stator on trouve alternativement un bâtonnet du groupe A' et un bâtonnet du groupe B'. Les flèches indiquent à nouveau le sens de la polarisation des bâtonnets. Dans ce cas, les bâtonnets 2 sont répartis de manière uniforme sur toute la circonférence du stator 1 avec une distance entre eux égale à λ/4.

La figure 4 représente une portion de stator annulaire 11 déroulée. Ce stator présente des protubérances 12 parallèles à l'axe du stator et régulièrement réparties sur la circonférence du stator. Les protubérances 12 délimitent entre-elles des encoches 13 de forme sensiblement elliptique de telle sorte que les protubérances 12 présentent un rétrécissement 14 autorisant une flexion des protubérances dans cette zone et formant ainsi une articulation pour les bâtonnets de céramique 2 fixés à l'extrémité de ces protubérances, par exemple par collage.

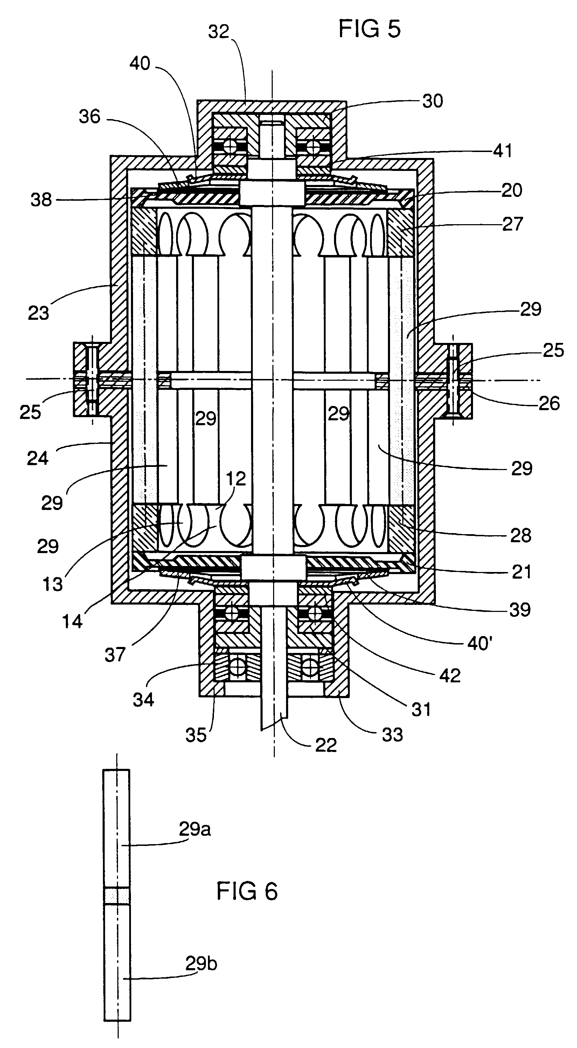

Un exemple de réalisation pratique de moteur est représenté à la figure 5.

Ce moteur comprend deux rotors 20 et 21 en forme de disques calés sur un arbre 22 monté par l'intermédiaire de butées à billes dans un boîtier constitué de deux demi-coquilles 23 et 24 munies de flasques par lesquelles elles sont assemblées au moyen de vis 25 avec interposition d'une pièce 26 en matière synthétique, en forme de disque servant de support à un système d'entraînement à double stator monté entre les rotors 20 et 21 et comprenant un premier stator annulaire 27 pour l'entraînement du rotor 20 et un second stator 28 pour l'entraînement du rotor 21. Les stators 27 et 28 sont reliés entre eux par des bâtonnets 29 à double polarisation. Un tel bâtonnet est représenté à la figure 6. Il est constitué de deux bâtonnets 29a et 29b collés en opposition de polarité par une de leurs extrémités ou par un bâtonnet unique 29, polarisé dans les deux directions à partir d'une électrode unique, de forme annulaire, disposée en son milieu. Ces bâtonnets 29 sont supportés par le disque 26 et disposés et alimentés comme décrit en relation avec la figure 3. Ils sont reliés aux stators 27 et 28 comme représenté à la figure 4, les références 12, 13, 14 renvoyant à la figure 4. Les stators et les bâtonnets constituent une cage rappelant une cage d'écureuil.

La précontrainte axiale des rotors 20 et 21 est obtenue automatiquement par l'assemblage des deux demi-coquilles 23 et 24 du boîtier. Cette précontrainte s'exerce entre deux paliers axiaux à billes 30 et 31. Le palier à billes 30 est logé dans une cuvette 32 formée dans le fond de la demi-coquille 23, tandis que le palier à billes 31 est logé dans un manchon cylindrique 33 prolongeant la demi-coquille 24. Il est retenu axialement par un palier à billes radial 34 lui-même en butée contre un rebord 35 du manchon 33. La précontrainte est assurée par des rondelles élastiques 36 et 37, de type rondelle Belleville, montées entre chacun des rotors et le palier à billes correspondant. Entre les rondelles élastiques 36 et 37 et les rotors sont disposées des feuilles de caoutchouc 38, respectivement 39 servant à amortir les vibrations des rotors. Entre chacune des rondelles élastiques 36 et 37 et le palier correspondant est montée une rondelle 40, respectivement 40' et une rondelle métallique 41, respectivement 42 constituant une cale d'épaisseur. Les cales d'épaisseur permettent précisément d'obtenir automatiquement la précontrainte nécessaire lors de la fermeture du boîtier du moteur par l'assemblage de ses demi-coquilles 23 et 24.

## Revendications

1. Moteur piézo-électrique à onde progressive comprenant un stator (1; 27, 28) constitué d'un corps annulaire, deux groupes (A, B; A', B') d'éléments piézo-électriques (2; 29) constitués de bâtonnets de céramique polarisés indépendants les uns des autres, disposés perpendiculairement au stator, c'est-à-dire parallèlement à l'axe du moteur, répartis sur le stator, en contact permanent avec le stator et excités par un courant alternatif avec un déphasage de π/2 entre les groupes de manière à engendrer à la surface du stator une déformation en forme d'onde progressive, et un rotor (20, 21) en forme de disque maintenu élastiquement en contact avec le stator pour son entraînement en rotation par l'onde progressive engendrée sur le stator, caractérisé en ce que les éléments piézo-électriques (2; 29) sont reliés chacun au stator par une articulation (3; 14).

2. Moteur piézo-électrique selon la revendication 1, caractérisé en ce que le stator (1; 27, 28) présente des protubérances (12) en direction des éléments piézo-électriques et que les éléments piézo-électriques (2) sont fixés à l'extrémité de ces protubérances, ces protubérances présentant un amincissement intermédiaire (14) formant articulation élastique.

3. Moteur piézo-électrique selon la revendication 2, caractérisé en ce que les bâtonnets (2; 29) sont régulièrement disposés sur toute la circonférence du stator et que les protubérances (12) correspondantes des stators délimitent entre elles des encoches (13) de forme sensiblement elliptique.

4. Moteur piézo-électrique selon l'une des revendications 1, 2 ou 3, caractérisé en ce qu'il comprend deux rotors coaxiaux (20, 21) associés à deux stators (27, 28) montés entre les rotors et des bâtonnets céramiques à double polarisation (9) disposés entre les stators et dont les extrémités sont respectivement reliées à chacun des stators.

5. Moteur piézo-électrique selon la revendication 4, caractérisé en ce que les éléments piézo-électriques (29) et les stators (27, 28) forment une cage cylindrique entre les rotors et que les rotors (20, 21) sont calés sur un arbre (22) monté entre deux paliers axiaux à billes (30, 31) et maintenus contre les stators par des éléments élastiques précontraints (36, 37) montés entre chacun des paliers et les rotors.

6. Moteur piézo-électrique selon la revendication 4 ou 5, caractérisé en ce que les bâtonnets céramiques à double polarisation (29) sont constitués de deux bâtonnets (29a, 29b) collés en opposition de polarité par une de leurs extrémités.

7. Moteur piézo-électrique selon la revendication 4 ou 5, caractérisé en ce que les bâtonnets céramiques à double polarisation (29) sont constitués d'un seul bâtonnet polarisé dans les deux directions à partir d'une électrode unique de forme annulaire, disposée en son milieu.

## Patentansprüche

1. Piezoelektrischer Wanderwellenmotor mit einem Ständer (1; 27, 28), bestehend aus einem ringförmigen Körper, mit zwei Gruppen (A, B; A', B') piezoelektrischer Elemente (2; 29), bestehend aus voneinander unabhängigen polarisierten Keramikstäben, die senkrecht zum Ständer, d.h. parallel zur Motorachse, auf dem Ständer verteilt angeordnet sind, sich in ständigem Kontakt mit dem Ständer befinden und durch einen Wechselstrom mit einer Phasenverschiebung von π/2 zwischen den Gruppen derart angeregt werden, dass an der Oberfläche des Ständers eine Verformung in Form einer Wanderwelle erzeugt wird, und mit einem Läufer (20, 21) in Form einer elastisch in Berührung mit dem Ständer gehaltenen Scheibe, um diese durch die auf dem Ständer erzeugte Wanderwelle in Drehung zu versetzen, dadurch gekennzeichnet, dass die piezoelektrischen Elemente (2; 29) jedes durch ein Gelenk (3; 14) mit dem Stator verbunden sind.

2. Piezoelektrischer Motor nach Anspruch 1, dadurch gekennzeichnet, dass der Ständer (1; 27, 28) Vorsprünge (12) in Richtung der piezoelektrischen Elemente aufweist und dass die piezoelektrischen Elemente (2) am Ende dieser Vorsprünge befestigt sind, wobei diese Vorsprünge eine Zwischen-Verengung (14) aufweisen, welche das elastische Gelenk bildet.

3. Piezoelektrischer Motor nach Anspruch 2, dadurch gekennzeichnet, dass die Stäbe (2; 29) regelmässig über den ganzen Umfang des Ständers verteilt sind und dass die entsprechenden Vorsprünge (12) des Ständers zwischen sich Aussparungen (13) begrenzen, die im wesentlichen elliptisch sind.

4. Piezoelektrischer Motor nach einem der Ansprüche 1, 2 oder 3, dadurch gekennzeichnet, dass er zwei koaxiale Läufer (20, 21), die mit zwei zwischen den Läufern montierten Ständern (27, 28) zusammenwirken, und keramische Stäbe mit doppelter Polarisation (9) aufweist, welche zwischen den Ständern angeordnet sind und deren Enden jeweils mit jedem der Ständer verbunden sind.

5. Piezoelektrischer Motor nach Anspruch 4, dadurch gekennzeichnet, dass die piezoelektrischen Elemente (29) und die Ständer (27, 28) zwischen den Läufern einen zylindrischen Käfig bilden und dass die Läufer (20, 21) auf einer zwischen zwei axialen Kugellagern (30, 31) montierten Welle (22) festgekeilt sind und durch vorgespannte elastische Elemente (36, 37), die zwischen jedem der Lager und den Läufern montiert sind, gegen den Ständer gehalten werden.

6. Piezoelektrischer Motor nach Anspruch 4 oder 5, dadurch gekennzeichnet, dass die keramischen Stäbe mit doppelter Polarisation (29) aus zwei Stäben (29a, 29b) bestehen, die mit einem ihrer Enden, bezüglich ihrer Polarität entgegengesetzt gerichtet, zusammengeklebt sind.

7. Piezoelektrischer Motor nach Anspruch 4 oder 5, dadurch gekennzeichnet, dass die keramischen Stäbe mit doppelter Polarisation (29) aus einem einzigen Stab bestehen, der in beiden Richtungen von einer einzigen, in seiner Mitte angeordneten ringförmigen Elektrode polarisiert wird.

## Claims

1. A traveling-wave piezoelectric motor comprising a stator (1; 27, 28) consisting of an annular body, two groups (A, B; A', B') of piezoelectric elements (2; 29), made of mutually independent polarized ceramic bars (2; 29) arranged perpendicularly to the stator, that is to say parallel to the axis of the motor and dispersed around the stator, in permanent contact with the stator and excited by an alternating current with a π/2 phase shift between the groups so as to produce, at the surface of the stator, a traveling wavelike deformation, and a rotor (20, 21) in the form of a disc held elastically in contact with the stator for the rotational driving thereof by the traveling wave produced on the stator, characterized in that the piezoelectric elements are each connected to the stator by an articulation (3; 14).

2. The piezoelectric motor as claimed in claim 1, characterized in that the stator (1; 27, 28) has protuberances (12) directed towards the piezoelectric elements and in that the piezoelectric elements (2) are fixed to the end of these protuberances, these protuberances having an intermediate narrowing (14) forming an elastic articulation.

3. The piezoelectric motor as claimed in claim 2, characterized in that the bars (2; 29) are arranged regularly around the whole of the circumference of the stator and in that the corresponding protuberances (12) of the stators delimit between them notches (13) of substantially elliptical shape.

4. The piezoelectric motor as claimed in one of claims 1, 2 or 3, characterized in that it comprises two coaxial rotors (20, 21) associated with two stators (27, 28) mounted between the rotors and dual-polarization ceramic bars (9) arranged between the stators, and the ends of which are connected to each of the stators respectively.

5. The piezoelectric motor as claimed in claim 4, characterized in that the piezoelectric elements (29) and the stators (27, 28) form a cylindrical cage between the rotors and in that the rotors (20, 21) are set onto a shaft (22) mounted between two axial ball bearings (30, 31) and held against the stators by prestressed elastic elements (36, 37) mounted between each of the bearings and the rotors.

6. The piezoelectric motor as claimed in claim 4 or 5, characterized in the dual-polarization ceramic bars (29) consist of two bars (29a, 29b) adhesively bonded in polarity opposition by one of their ends.

7. The piezoelectric motor as claimed in claim 4 or 5, characterized in that the dual-polarization ceramic bars (29) consist of a single bar polarized in both directions from a single electrode of annular shape arranged at the middle thereof.
